# FASCICULE DE BREVET EUROPEEN

(11) **EP 1 334 859 B1**
(45) Date de publication et mention de la délivrance du brevet: **19.01.2011**
(21) Numéro de dépôt: 03290335.3
(22) Date de dépôt: 11.02.2003
(51) Int. Cl.: B60J 7/14

(54) **Véhicule automobile à toit repliable à positions multiples**
Kraftfahrzeug mit einem merfach verstellbaren, absenkbaren Dach
Motor vehicle with multi-positional storable roof

(30) Priorité: 11.02.2002 FR 0201617
(43) Date de publication de la demande: 13.08.2003
(73) Titulaire: Peugeot Citroën Automobiles, 78943 Vélizy Villacoublay Cédex (FR)
(72) Inventeur: Le Coquil, Serge, 91330 Yerres (FR)
(74) Mandataire: De Cuenca, Emmanuel Jaime

(56) Documents cités:
- FR-A- 1 049 026
- US-A- 4 796 943
- US-A- 5 967 591

## Description

L'invention se rapporte à un véhicule automobile comportant un toit repliable à positions multiples.

L'invention concerne plus particulièrement un véhicule à toit repliable constitué d'une partie avant et d'une partie arrière, et comportant un volet arrière mobile formant le couvercle d'un compartiment de rangement pour au moins une partie du toit replié.

Il est connu des documents FR-1049206 et US-5,967,591 des véhicules à toit repliable, comportant un mécanisme permettant un déplacement des parties de toit derrière la rangée de sièges avant, dans un compartiment distincts du coffre. En particulier du document US-5 967591 est connu un véhicule selon le préambule de la revendication1.

Il est aussi connu du document US-4,796,943 un mécanisme de déplacement en simultané des parties de toit qui est en outre complexe dans sa mise en oeuvre.

Il est connu des véhicules à toit repliable dans lesquels le toit est constitué de deux parties articulées entre elles et susceptibles d'être repliées dans un compartiment situé à l'arrière du véhicule et refermé par un couvercle mobile. Dans ce type de véhicule, la partie arrière du toit est en général mobile en rotation sur la structure du véhicule. La partie avant du toit est reliée quant à elle à la partie arrière par un système de biellettes. De cette façon, lors du repliement du toit, la face inférieure de la partie avant du toit vient se disposer au regard de la face inférieure de la partie arrière du toit. L'ensemble ainsi replié vient se loger dans le compartiment arrière.

Ce type de véhicule présente cependant de nombreux inconvénients. Ainsi, le mécanisme du toit repliable est relativement complexe car il fait intervenir un grand nombre de pièce. Par ailleurs, il est difficile d'obtenir une étanchéité satisfaisante à la jonction entre les parties avant et arrière du toit du fait que, d'une part le joint est en plusieurs morceaux sur des parties mobiles les unes par rapport aux autres et, d'autre part, les mouvements de repliement et de déploiement du toit font travailler de façon particulière ce joint.

De plus, le toit replié a un encombrement relativement important dans la direction verticale qui diminue l'espace disponible pour le coffre du véhicule et/ou pour les passagers arrière.

Enfin, lorsque le véhicule est dans sa configuration cabriolet (toit replié et rangé dans le compartiment), le véhicule perd de sa rigidité et donc protège moins bien les occupants en cas de choc. En outre, en configuration cabriolet, les passagers du véhicule sont plus exposés à des blessures graves lors d'un retournement du véhicule.

Un but de la présente invention est de pallier tout ou partie des inconvénients de l'art antérieur relevés ci-dessus.

A cette fin, le véhicule à toit repliable selon l'invention, par ailleurs conforme à la définition générique qu'en donne le préambule, est essentiellement caractérisé par la combinaison des caractéristiques listées à la revendication 1.

Par ailleurs, l'invention peut comporter l'une ou plusieurs des caractéristiques suivantes :
- les axes de rotations respectifs des parties avant et arrière du toit sont décalés dans la direction longitudinale du véhicule,
- la partie arrière est apte à être rangée dans le compartiment tandis que la partie avant est maintenue en position d'utilisation, pour disposer le véhicule dans une configuration du type "semi-cabriolet",
- les parties arrière et avant sont aptes à être rangées successivement dans le compartiment pour disposer le véhicule dans une configuration du type cabriolet,
- les parties avant et arrière sont conformées de façon que, lors des mouvements de repliement du toit, ces dernières effectuent de rotations simples selon un même sens de rotation et, lors du redéploiement du toit, les parties avant et arrière effectuent des rotations simples également selon un même sens de rotation,
- les parties avant et arrière sont déplaçables électriquement au moyen de deux moteurs d'entraînement indépendants,
- les parties avant et arrière sont déplaçables électriquement au moyen d'un même moteur d'entraînement et d'un système de transmission du mouvement,
- les moyens de transmission sont agencés de façon que le repliement du toit dans le compartiment est réalisé par une première rotation de la partie arrière suivie d'une seconde rotation de la partie avant, et d'un mouvement contraire lors du redéploiement du toit en position d'utilisation,
- le volet arrière est mobile en rotation selon un axe de rotation situé sensiblement à l'arrière du véhicule, et en ce que le volet arrière est ouvert préalablement à l'entrée ou à la sortie d'une partie de toit du compartiment,
- la partie avant du toit est constituée d'une pièce rigide comportant un corps sensiblement plan relié à la structure du véhicule par l'intermédiaire de deux bras formés dans le prolongement arrière des bords longitudinaux du rectangle,
- la partie avant du toit est constituée d'une pièce rigide comportant un corps sensiblement plan relié à la structure du véhicule par l'intermédiaire de deux bras, une première extrémité de chaque bras étant articulée sur la structure du véhicule, la seconde extrémité de chaque bras étant fixée au corps sensiblement plan, les deux bras étant situés sensiblement en regard de la face interne de la partie avant de toit, de façon que les bras se situent à l'interieur de l'habitacle lorsque le toit est en position déployée.

D'autres particularités et avantages apparaîtront à la lecture de la description ci-après, faite en référence aux figures dans lesquelles :
- la figure 1 représente une vue schématique et de côté d'un véhicule conforme à l'invention dans une première configuration (toit complètement fermé),
- la figure 2 représente une vue de côté du véhicule de la figure 1 dans une configuration intermédiaire de repliement du toit,
- la figure 3 représente une vue de côté du véhicule de la figure 1 dans une seconde configuration dite "semi-cabriolet",
- les figures 4 et 5 représentent des vues de côté du véhicule de la figure 1 conforme à l'invention dans deux autres configurations intermédiaire de repliement du toit,
- la figure 6 représente une vue de côté du véhicule de la figure 1 dans une troisième configuration dite "cabriolet",
- la figure 7 représente une vue de côté et en biais du véhicule de la figure 1 dans une configuration intermédiaire de repliement du toit,
- la figure 8 représente une vue de côté et en biais du véhicule de la figure 1 dans une configuration intermédiaire de repliement du toit correspondant sensiblement à la configuration de la figure 4,
- les figures 9 et 10 représentent des vues en perspective et simplifiées d'un détail du véhicule de la figure 1 illustrant respectivement deux exemples de réalisation des moyens d'actionnement du toit repliable selon l'invention,
- la figure 11 représente une vue en perspective d'un mécanisme de toit, selon une seconde forme de réalisation de l'invention,
- la figure 12 représente une vue de côté du mécanisme de la figure 11 en position repliée.

Le véhicule 1 selon l'invention comporte un toit repliable 3, 4 et un volet arrière 2 mobile formant le couvercle d'un compartiment 5 de rangement du toit situé à l'arrière du véhicule.

Le toit repliable est formé par une partie avant 3 et une partie arrière 4 indépendantes, c'est à dires qui ne sont pas articulées entre elles.

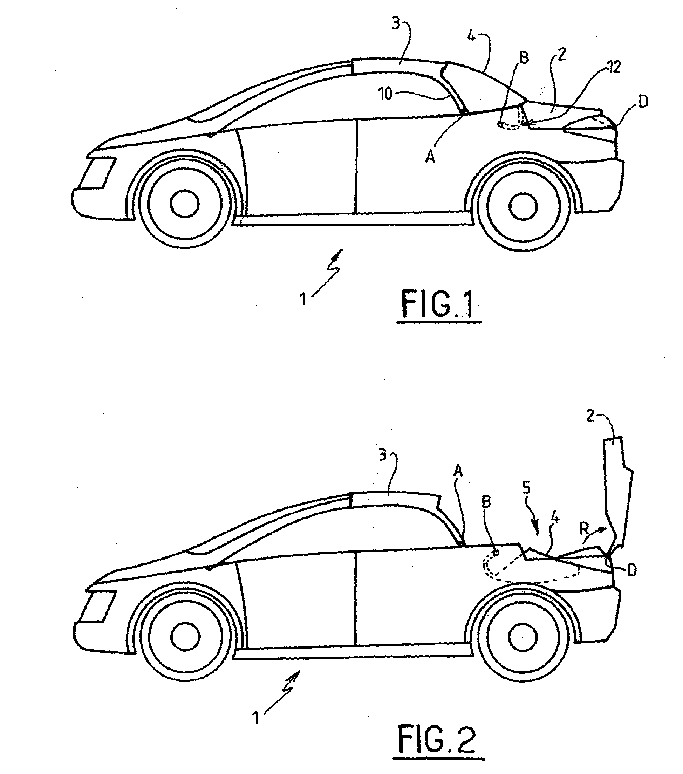

La partie avant 3 du toit est constituée d'une pièce rigide comportant un corps sensiblement plan et rectangulaire. Le corps plan est relié à la structure du véhicule par l'intermédiaire de deux bras 10 formés dans le prolongement arrière des bords longitudinaux du rectangle (figures 1 à 4). De préférence, les deux bras 10 sont monoblocs avec le corps plan. La première partie de toit 3 est articulée sur la structure du véhicule 1 au niveau de l'extrémité des bras 10 et autour d'un axe de rotation A.

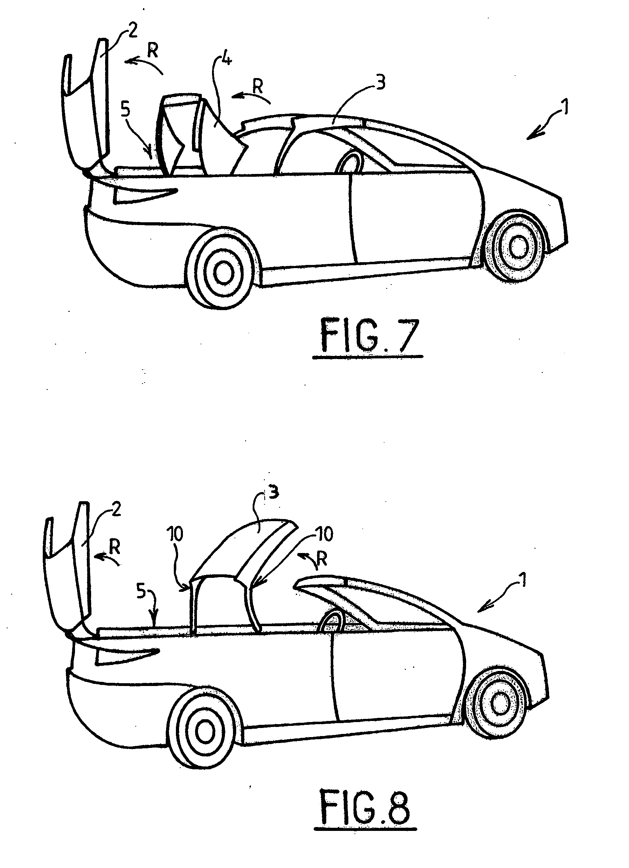

La partie arrière 4 du toit est constituée quant à elle de la lunette arrière et de son encadrement, avec notamment, les éléments de custode gauche et droit (cf. figure 7). La partie arrière 4 est articulée sur la structure du véhicule selon un axe de rotation B distinct de l'axe de rotation A de la partie avant 3.

Ainsi, chacune des parties 3, 4 est mobile autour d'un seul axe de rotation A, B propre.

Plus précisément, les axes de rotation A, B des parties avant 3 et arrière 4 du toit sont décalés dans la direction longitudinale du véhicule. Par exemple, en se référant à l'avant et à l'arrière du véhicule 1, l'axe de rotation A de la partie avant peut être situé à l'avant de l'axe de rotation B de la partie arrière 4.

Le volet arrière 2 est quant à lui mobile en rotation selon un axe de rotation D situé sensiblement à l'arrière du véhicule. Le volet arrière 2 forme un couvercle pour un logement 5 apte à accueillir au moins en partie le toit 3, 4 replié. Le logement 5 est situé, par exemple, au-dessus de la malle arrière du véhicule 1. Classiquement, le volet arrière 2 est ouvert préalablement à l'entrée ou à la sortie d'une partie de toit 3, 4 du compartiment 5

Selon l'invention, les parties avant 3 et arrière 4 du toit sont aptes à être déplacées en rotation successivement et/ou indépendamment.

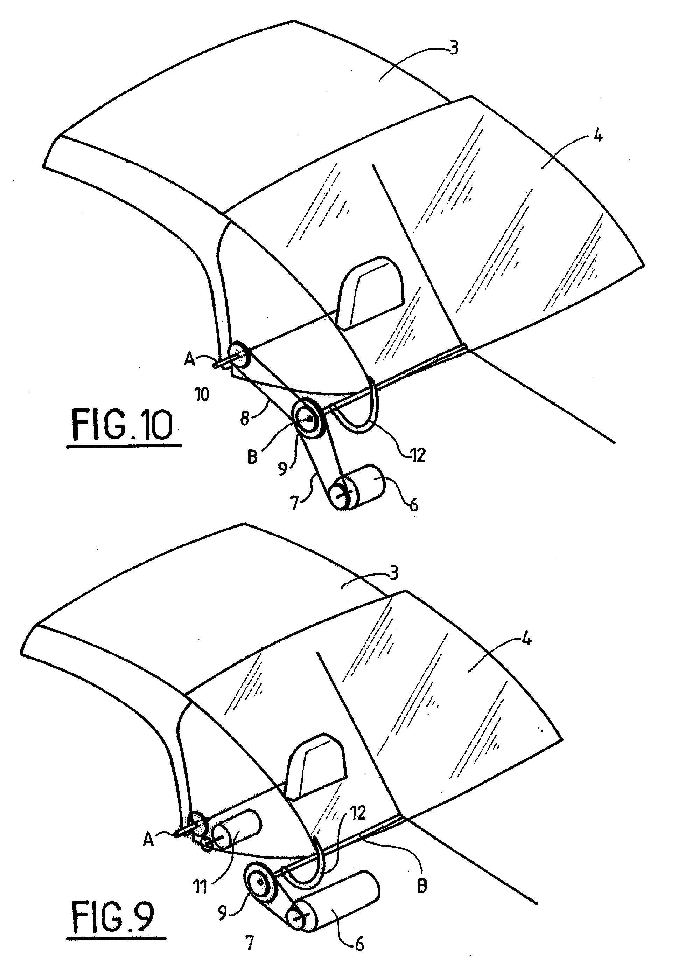

Les moyens d'entraînement en rotation des parties avant 3 et arrière 4 du toit ainsi que du volet 2 peuvent être mécaniques et/ou électriques. De plus, les moyens d'entraînement des parties avant 3 et arrière 4 du toit peuvent être distincts et indépendants, ou communs et associés à des moyens de transmission du mouvement d'une partie 4 à l'autre partie 3. Deux exemples de systèmes d'entraînement automatique du toit 3, 4 seront décrit plus en détail ci-après en référence aux figures 9 et 10.

Dans la configuration représentée à la figure 1, le toit 3, 4 du véhicule 1 est complètement fermé. Le bord avant de la partie arrière 4 du toit est emboîté (ou posé) sur le bord arrière de la partie avant 3 du toit.

Lorsque l'utilisateur souhaite ouvrir partiellement le toit, il peut ranger (manuellement ou automatiquement) la partie arrière 4 du toit dans le compartiment 5. Pour cela, le volet arrière 2 est ouvert vers l'arrière par une rotation selon un premier sens de rotation R (figure 7). Simultanément (ou postérieurement), la partie arrière 4 du toit est entraînée en rotation vers l'arrière selon le premier sens de rotation R (figure 7), jusqu'à venir reposer à l'envers (face inférieure tournée vers le haut) dans le compartiment 5 (figure 2).

Ensuite, l'utilisateur peut refermer le volet 2 vers l'avant dans le sens de rotation contraire (contraire au premier sens R). Dès lors, seule la partie arrière 4 est escamotée, le véhicule 1 est alors dans une configuration dite "semi-cabriolet". Dans cette configuration, les occupants du véhicule bénéficient à la fois des avantages d'un véhicule cabriolet et d'un véhicule à toit rigide. En effet, la partie avant 3 du toit sert de protection aux passagers en cas de retournement et rigidifie la caisse améliorant ainsi sa tenue aux chocs.

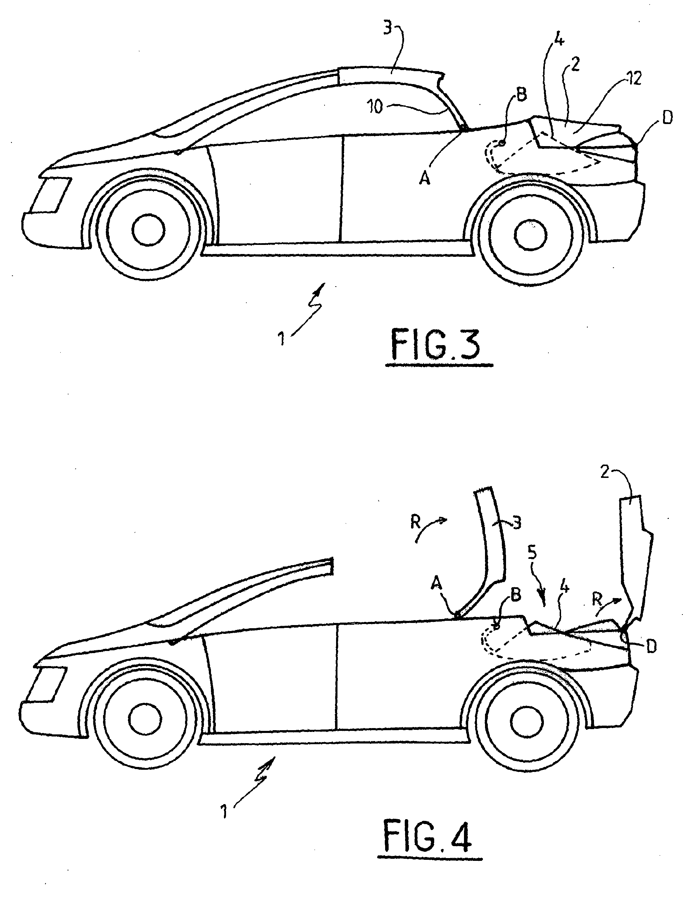

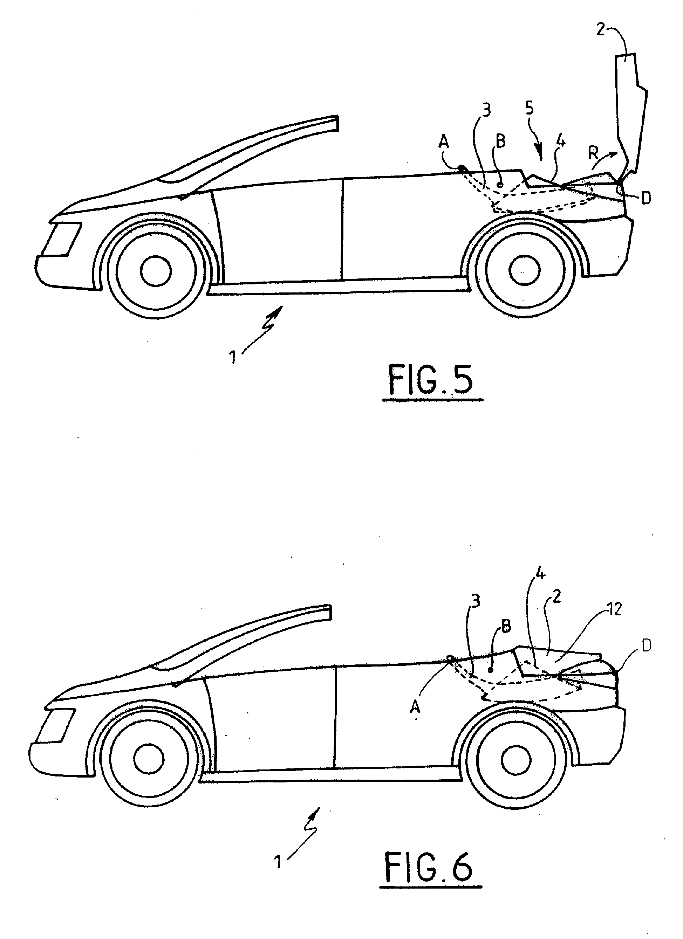

Si l'utilisateur souhaite disposer le véhicule en configuration "cabriolet", il peut poursuivre l'escamotage du toit. Dans ce cas, il ouvre à nouveau le volet 2 arrière et fait pivoter la partie avant 3 du toit vers l'arrière dans le premier sens de rotation R (figures 4 et 8). La partie avant 3 vient alors se disposer dans le compartiment 5, sur la partie arrière 4. La partie avant 3 est également disposée à l'envers, c'est à dire avec sa face inférieure tournée vers le haut (figure 5).

Le volet arrière 2 peut alors être refermé à nouveau, pour disposer le véhicule 1 dans sa configuration cabriolet (figure 6).

La fermeture (partielle ou totale) est réalisée par le processus inverse à celui décrit ci-dessus.

Comme mentionné précédemment, les parties avant 3 et arrière 4 du toit, ainsi que le volet 2 peuvent être actionnés manuellement et/ou automatiquement. Dans le cas d'un actionnement automatique, un moteur propre 6, 11 peut être prévu pour chaque élément mobile 4, 3 (figure 9).

Dans l'exemple de réalisation de la figure 9, le moteur 6 d'entraînement de la partie arrière 4 de toit n'est pas relié directement à l'axe de rotation B, mais par l'intermédiaire d'un système à chaîne ou câble 7 et poulie 9. Par ailleurs, la partie arrière 4 est reliée à son axe de rotation B par le biais d'un ou plusieurs bras courbe 12.

En variante, un seul moteur 6 d'entraînement peut être prévu pour entraîner en rotation deux éléments, au moyen, par exemple, d'un système de transmission du mouvement d'un axe de rotation B à l'autre A (figure 10). Par exemple, un moteur 6 peut être monté sur la structure du véhicule et relié à l'axe 9 de rotation de la partie arrière 4 du toit au moyen d'une chaîne 7 et d'une poulie 9. De plus, la poulie 9 solidaire de l'axe 10 de rotation de la partie arrière 4 peut être reliée, via une seconde chaîne 8 de transmission et une seconde poulie 10, à l'axe de rotation A de la partie avant 3. De cette façon, l'unique moteur 6 commande les deux rotations des parties arrière 4 et avant 3. Les moyens de transmission 7, 8, 9, 10 peuvent introduire un décalage dans les mouvements de rotation relatifs des deux parties 3, 4 de toit, notamment pour permettre l'ouverture partielle du toit (configuration "semi-cabriolet".

Bien entendu, il est possible d'envisager d'autres agencements. Par exemple, plusieurs moteurs d'entraînements peuvent être prévus pour chaque élément de toit 3, 4. Ainsi, il est possible de disposer deux moteurs d'entraînement au niveau respectivement des deux extrémités de chaque axe de rotation d'un élément de toit.

On conçoit donc que l'agencement de toit escamotable selon l'invention, tout en étant de structure simple et peu coûteuse permet de disposer un véhicule dans plusieurs configurations. En particulier, les deux éléments de toits n'effectuent que des mouvements de rotations simples qui ne nécessitent pas des systèmes complexes à biellettes.

Par ailleurs, l'agencement selon l'invention permet de diminuer le volume du toit replié dans le compartiment par rapport aux systèmes de l'art antérieur. En effet, l'empilage à l'envers des deux parties de toit permet de diminuer significativement l'encombrement vertical du toit replié par rapport aux systèmes dans lesquels le toit est plié en portefeuille. Cet encombrement est encore réduit lorsque le véhicule est en configuration dite "semi-cabriolet".

De plus, ce mode d'escamotage n'affecte pas le volume destiné aux passagers arrières.

En outre l'agencement selon l'invention permet de simplifier les moyens d'étanchéité entre les deux parties de toit 3, 4. En effet, dans le système proposé, il est possible de disposer un joint continu sur le bord arrière de la partie avant 3, c'est-à-dire un joint en une seule pièce. De même, il est possible de disposer un joint continu sur les bords longitudinaux du toit, du côté des vitres latérales du véhicule.

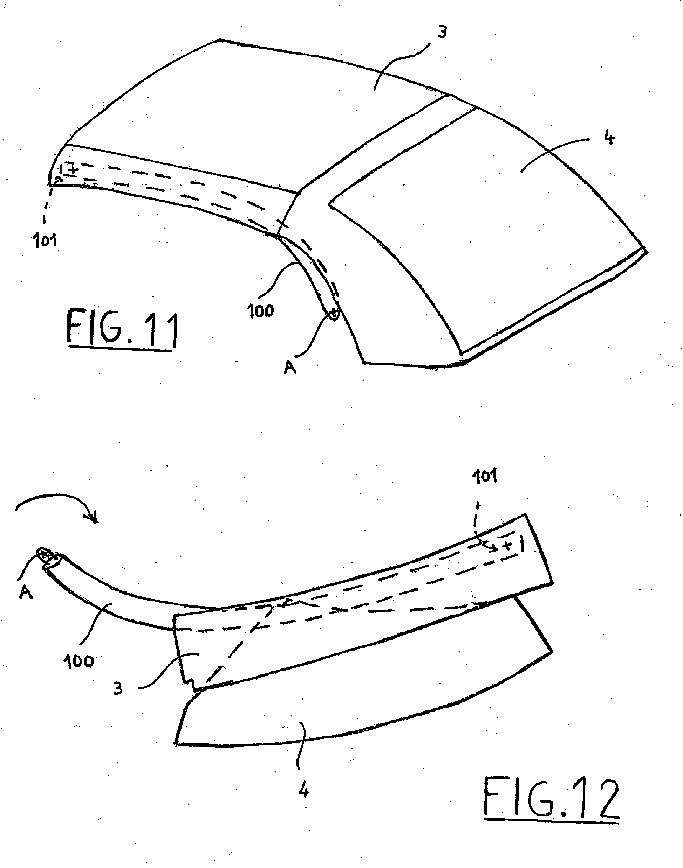

Les figures 11 et 12 illustrent une variante de réalisation de l'invention. Par soucis de simplification, seul une partie du mécanisme de toit a été représenté. Par ailleurs, les éléments identiques à ceux décrits ci-dessus sont désignés par les mêmes références numériques.

Cette seconde forme de réalisation diffère de la première décrite ci-dessus uniquement par le fait que la partie avant 3 du toit est constituée d'une pièce rigide comportant un corps sensiblement plan relié à la structure du véhicule par l'intermédiaire de deux bras 100 rapportés sur le corps plan.

Plus précisément, une première extrémité de chaque bras est articulée A sur la structure du véhicule, tandis que la seconde extrémité 101 de chaque bras est fixée au corps sensiblement plan. De préférence, la seconde extrémité 101 des bras 100 est fixée au niveau de la partie avant du corps sensiblement plan.

Les deux bras 100 sont situés sensiblement en regard de la face interne de la partie avant de toit 3, de façon que les bras 100 se situent à l'intérieur de l'habitacle lorsque le toit 3 est en position déployée. C'est-à-dire que les bras 100 sont situés à l'intérieur du véhicule.

Cette seconde forme de réalisation présente la même cinématique que celle décrite précédemment. Cependant, l'agencement des bras 100 par rapport au corps sensiblement plan 3 assure une meilleure rigidité et solidité du toit.

## Revendications

1. Véhicule automobile comportant un toit repliable à positions multiples et un volet arrière (2) mobile formant le couvercle d'un compartiment (5) de rangement pour au moins une partie du toit (3, 4) replié, le toit étant constitué d'une partie avant (3) et d'une partie arrière (4), **caractérisé en ce que** les parties avant (3) et arrière (4) sont constituées chacune d'une arche rigide et non pliable, **en ce que** chacune des parties (3, 4) est mobile autour d'un seul axe de rotation (A, B) propre, de sorte que les parties avant (3) et arrière (4) sont aptes à être déplacées en rotation, successivement et/ou indépendamment, et **en ce qu'**en configuration cabriolet du véhicule, la partie avant (3) est disposée dans le compartiment (5) sur la partie arriére (4), lesdites parties avant (3) et arriére (4) étant alors disposées à l'envers, c'est à dire avec leur face inférieure tournée vers le haut.

2. Véhicule selon la revendication 1, **caractérisé en ce que** les axes de rotations (A, B) respectifs des parties avant (3) et arrière (4) du toit sont décalés dans la direction longitudinale du véhicule.

3. Véhicule selon la revendication 1 ou 2, **caractérisé en ce que** la partie arrière (4) est apte à être rangée dans le compartiment (5) tandis que la partie avant (3) est maintenue en position d'utilisation, pour disposer le véhicule dans une configuration du type "semi-cabriolet".

4. Véhicule selon l'une quelconque des revendications 1 ou 2, **caractérisé en ce que** les partie arrière (4) et avant (3) sont aptes à être rangées successivement dans le compartiment (5) pour disposer le véhicule dans ladite configuration cabriolet.

5. Véhicule selon la revendication 1 ou 4, **caractérisé en ce que** les parties avant (3) et arrière (4) sont conformées de façon que, lors des mouvements de repliement du toit, ces dernières effectuent des rotations simples selon un même sens de rotation et, lors du redéploiement du toit, les parties avant (3) et arrière (4) effectuent des rotations simples également selon un même sens de rotation.

6. Véhicule selon l'une quelconque des revendications 1 à 5, **caractérisé en ce que** les parties avant (3) et arrière (4) sont déplaçables électriquement au moyen de deux moteurs d'entraînement indépendants.

7. Véhicule selon l'une quelconque des revendications 1 à 5, **caractérisé en ce que** les parties avant (3) et arrière (4) sont déplaçables électriquement au moyen d'un même moteur (6) d'entraînement et d'un système (7, 8, 9) de transmission du mouvement.

8. Véhicule selon la revendication 7, **caractérisé en ce que** les moyens (7, 8, 9) de transmission sont agencés de façon que le repliement du toit dans le compartiment (5) est réalisé par une première rotation de la partie arrière (4) suivie d'une seconde rotation de la partie avant (3), et d'un mouvement contraire lors du redéploiement du toit en position d'utilisation.

9. Véhicule selon l'une quelconque des revendications précédentes, **caractérisé en ce que** le volet arrière (2) est mobile en rotation selon un axe de rotation (D) situé sensiblement à l'arrière du véhicule, et **en ce que** le volet arrière (2) est ouvert préalablement à l'entrée ou à la sortie d'une partie de toit (3, 4) du compartiment (5).

10. Véhicule selon l'une quelconque des revendications précédentes, **caractérisé en ce que** la partie avant (3) du toit est constituée d'une pièce rigide comportant un corps sensiblement plan relié à la structure du véhicule par l'intermédiaire de deux bras (10) formés dans le prolongement arrière des bords longitudinaux du rectangle.

11. Véhicule selon l'une quelconque des revendications 1 à 9, **caractérisé en ce que** la partie avant (3) du toit est constituée d'une pièce rigide comportant un corps sensiblement plan relié à la structure du véhicule par l'intermédiaire de deux bras (100), une première extrémité de chaque bras étant articulée (A) sur la structure du véhicule, la seconde extrémité (101) de chaque bras étant fixée au corps sensiblement plan, et **en ce que** les deux bras (100) sont situés sensiblement en regard de la face interne de la partie avant de toit (3), de façon que les bras (100) se situent à l'interieur de l'habitacle lorsque le toit (3) est en position déployée.

## Claims

1. Motor vehicle comprising a multi-positional foldable roof and a movable rear panel (2) forming the cover of a storage compartment (5) for at least part of the folded roof (3, 4), the roof being constituted by a front part (3) and a rear part (4), **characterized in that** the front (3) and rear (4) parts are each constituted by a rigid and non-foldable arch, **in that** each of the parts (3, 4) is movable about its own single rotation axis (A, B), such that the front (3) and rear (4) parts are suited to be displaced in rotation successively and/or independently and **in that** in cabriolet configuration of the vehicle, the front part (3) is disposed in the compartment (5) on the rear part (4), the said front (3) and rear (4) parts being then disposed in reverse, i.e. with their lower face turned upwards.

2. Vehicle according to Claim 1, **characterized in that** the respective rotation axes (A, B) of the front (3) and rear (4) parts of the roof are staggered in the longitudinal direction of the vehicle.

3. Vehicle according to Claim 1 or 2, **characterized in that** the rear part (4) is suited to be stored in the compartment (5) when the front part (3) is held in a position of use, to arrange the vehicle in a configuration of the "semi-cabriolet" type.

4. Vehicle according to any one of Claims 1 or 2, **characterized in that** the rear (4) and front (3) parts are suited to be stored successively in the compartment (5) to arrange the vehicle in the said cabriolet configuration.

5. Vehicle according to Claim 1 or 4, **characterized in that** the front (3) and rear (4) parts are shaped such that on the folding movements of the roof these latter carry out simple rotations along the same direction of rotation and, on redeployment of the roof, the front (3) and rear (4) parts carry out simple rotations, likewise along the same direction of rotation.

6. Vehicle according to any one of Claims 1 to 5, **characterized in that** the front (3) and rear (4) parts are movable electrically by means of two independent drive motors.

7. Vehicle according to any one of Claims 1 to 5, **characterized in that** the front (3) and rear (4) parts are movable electrically by means of the same drive motor (6) and a system (7, 8, 9) for transmission of the movement.

8. Vehicle according to Claim 7, **characterized in that** the transmission means (7, 8, 9) are arranged such that the folding of the roof in the compartment (5) is realized by a first rotation of the rear part (4) followed by a second rotation of the front part (3), and a contrary movement on redeployment of the roof into the position of use.

9. Vehicle according to any one of the preceding claims, **characterized in that** the rear panel (2) is movable in rotation about a rotation axis (D) situated substantially at the rear of the vehicle, and **in that** the rear panel (2) is open prior to the entry or the exit of a roof part (3, 4) from the compartment (5).

10. Vehicle according to any one of the preceding claims, **characterized in that** the front part (3) of the roof is constituted by a rigid piece comprising a substantially flat body connected to the structure of the vehicle by means of two arms (10) formed in the rear extension of the longitudinal edges of the rectangle.

11. Vehicle according to any one of Claims 1 to 9, **characterized in that** the front part (3) of the roof is constituted by a rigid piece comprising a substantially flat body connected to the structure of the vehicle by means of two arms (100), a first end of each arm being articulated (A) on the structure of the vehicle, the second end (101) of each arm being fixed to the substantially flat body, and **in that** the two arms (100) are situated substantially opposite the internal face of the front roof part (3), such that the arms (100) are situated inside the passenger compartment when the roof (3) is in deployed position.

## Patentansprüche

1. Kraftfahrzeug, das ein zurückfaltbares Dach mit mehreren Positionen und eine hintere mobile Klappe (2), die den Deckel eines Verstaufachs (5) für mindestens einen Teil des zurückgefalteten Dachs (3, 4) bildet, aufweist, wobei das Dach aus einem Vorderteil (3) und einem Hinterteil (4) besteht, **dadurch gekennzeichnet, dass** der Vorderteil (3) und der Hinterteil (4) jeweils aus einem starren und nicht faltbaren Bogen bestehen und dass jeder der Teile (3, 4) um eine einzige eigene Rotationsachse (A, B) derart beweglich ist, dass der Vorderteil (3) und der Hinterteil (4) in Drehung aufeinander folgend und/oder unabhängig bewegt werden können, und dass der Vorderteil (3) in Kabriolettkonfiguration des Fahrzeugs in dem Fach (5), auf dem Hinterteil (4) angeordnet ist, wobei der Vorderteil (3) und der Hinterteil (4) umgekehrt angeordnet sind, das heißt mit ihrer Unterseite nach oben gekehrt.

2. Kraftfahrzeug nach Anspruch 1, **dadurch gekennzeichnet, dass** die jeweiligen Rotationsachsen (A, B) des Vorderteils (3) und des Hinterteils (4) des Dachs in die Längsrichtung des Fahrzeugs versetzt sind.

3. Fahrzeug nach Anspruch 1 oder 2, **dadurch gekennzeichnet, dass** der Hinterteil (4) in dem Fach (5) verstaut werden kann, während der Vorderteil (3) in Gebrauchsposition gehalten wird, um das Fahrzeug in einer Konfiguration des Typs "Halbkabriolett" anzuordnen.

4. Fahrzeug nach einem der Ansprüche 1 oder 2, **dadurch gekennzeichnet, dass** der Hinterteil (4) und der Vorderteil (3) nacheinander in dem Fach (5) verstaut werden können, um das Fahrzeug in der Kabriolettkonfiguration anzuordnen.

5. Fahrzeug nach Anspruch 1 oder 4, **dadurch gekennzeichnet, dass** der Vorderteil (3) und der Hinterteil (4) derart ausgebildet sind, dass diese Letzteren bei den Bewegungen des Zurückfaltens des Dachs einfache Drehungen entlang einer gleichen Drehrichtung ausführen, und, während des Ausbreitens des Dachs, der Vorderteil (3) und der Hinterteil (4) einfache Drehungen ebenfalls in eine gleiche Drehrichtung ausführen.

6. Fahrzeug nach einem der Ansprüche 1 bis 5, **dadurch gekennzeichnet, dass** der Vorderteil (3) und der Hinterteil (4) elektrisch mittels zwei unabhängigen Antriebsmotoren verschoben werden können.

7. Fahrzeug nach einem der Ansprüche 1 bis 5, **dadurch gekennzeichnet, dass** der Vorderteil (3) und der Hinterteil (4) elektrisch mittels eines gleichen Antriebsmotors (6) und eines Systems (7, 8, 9) zum Übertragen der Bewegung verschoben werden können.

8. Fahrzeug nach Anspruch 7, **dadurch gekennzeichnet, dass** die Übertragungsmittel (7, 8, 9) derart eingerichtet sind, dass das Zurückfalten des Dachs in das Fach (5) durch eine erste Drehung des Hinterteils (4) gefolgt von einer zweiten Drehung des Vorderteils (3) und einer entgegen gesetzten Bewegung beim Aufbreiten des Dachs in Gebrauchsposition ausgeführt wird.

9. Fahrzeug nach einem der vorhergehenden Ansprüche, **dadurch gekennzeichnet, dass** die hintere Klappe (2) in Drehung um eine Rotationsachse (D), die sich im Wesentlichen an der Rückseite des Fahrzeugs befindet, beweglich ist, und dass die hintere Klappe (2) vor dem Eintreten oder dem Austreten eines Dachteils (3, 4) in das Fach (5) oder aus im heraus geöffnet wird.

10. Fahrzeug nach einem der vorhergehenden Ansprüche, **dadurch gekennzeichnet, dass** der Vorderteil (3) des Dachs aus einem starren Teil besteht, der einen im Wesentlichen flachen Körper aufweist, der mit der Struktur des Fahrzeugs über zwei Arme (10), die in der hinteren Verlängerung der Längsränder des Rechtecks ausgebildet sind, verbunden ist.

11. Fahrzeug nach einem der Ansprüche 1 bis 9, **dadurch gekennzeichnet, dass** der Vorderteil (3) des Dachs aus einem starren Teil besteht, der einen im Wesentlichen flachen Körper aufweist, der mit der Struktur des Fahrzeugs über zwei Arme (100) verbunden ist, wobei ein erstes Ende jedes Arms (A) auf der Struktur des Fahrzeugs angelenkt ist, wobei das zweite Ende (101) jedes Arms an dem im Wesentlichen flachen Körper befestigt ist, und dass die zwei Arme (100) im Wesentlichen gegenüber der Innenseite des Vorderteils (3) des Dachs derart liegen, dass sich die Arme (100) im Inneren in der Fahrgastzelle befinden, wenn das Dach (3) in aufgebreiteter Position ist.
